# EUROPÄISCHE PATENTANMELDUNG

(11) **EP 1 887 332 A1**
(43) Veröffentlichungstag der Anmeldung: **13.02.2008**
(21) Anmeldenummer: 06118566.6
(22) Anmeldetag: 08.08.2006
(51) Int. Cl.: G01J 3/51

(54) **Farbmesskopf**

(71) Anmelder: GretagMacbeth AG, 8105 Regensdorf (CH)
(72) Erfinder: Frick, Beat, 8107, Buchs (CH); Ammeter, Harald, 8003, Zürich (CH)
(74) Vertreter: Schwabe - Sandmair - Marx

(57) **Zusammenfassung**

Ein zur Ausmessung von Farbeigenschaften eines Messobjekts bestimmter fotoelektrischer Farbmesskopf umfasst eine Beleuchtungseinrichtung zur Beaufschlagung des Messobjekts mit Beleuchtungslicht und eine wellenlängenbereichsselektive fotoelektrische Empfängereinrichtung (40), welche vom beleuchteten Messobjekt remittiertes Messlicht auffängt und in entsprechende elektrische Messsignale umwandelt. Die Beleuchtungseinrichtung umfasst eine im Wesentlichen weiss strahlende Leuchtdiode (30) und Mittel (60) zur Begrenzung des Einfallswinkelbereichs, so dass das Messobjekt Licht nur unter einem für Farbmessanwendungen standardisierten Einfallswinkelbereich von vorzugsweise 45°+/-5-10° empfängt. Die Empfangereinrichtung weist ein aus einer Vielzahl von zeilenförmig angeordneten fotoelektrischen Sensor-Pixeln bestehendes Sensor-Feld auf und die Sensor-Pixel sind durch vorgeschaltete Farbfilter (420) auf unterschiedliche Wellenlängenbereiche sensibilisiert. Das Sensor-Feld ist als Chip ausgebildet und ist zusammen mit der Leuchtdiode (30) auf einer gemeinsamen heiterplatte (1) montiert. Die Farbfilter (420) sind auf einem länglichen transparenten Filterträger angebracht und unmittelbar über dem Lichteintrittsfenster des Sensor-Felds montiert. Das Sensor-Feld ist zusammen mit den Farbfiltern als flache Sandwich-Struktur ausgebildet und von einem Schutzrahmen umschlossen und mit einer opaken Dichtungsmasse vergossen.

Der Farbmesskopf hat ein extrem kleines Bauvolumen und ist mit vergleichsweise geringem Konstruktionsaufwand herstellbar.

## Beschreibung

Die Erfindung betrifft einen fotoelektrischen Farbmesskopf zur Ausmessung von Farbeigenschaften eines Messobjekts gemäss dem Oberbegriff des unabhängigen Anspruchs 1.

Farbmessköpfe der gattungsgemässen Art sind der zentrale Bestandteil von fotoelektrischen Farbmessgeräten im weitesten Sinn. Die Farbmessköpfe dienen dazu, ein Messobjekt mit Licht zu beaufschlagen und das vom Messobjekt zurückgestrahlte Messlicht zu empfangen, in Wellenlängenbereiche aufzutrennen und die Lichtanteile der einzelnen Wellenlängenbereiche in entsprechende elektrische Messsignale umzuwandeln. Aus diesen können dann die am Messobjekt interessierenden Grössen, zum Beispiel Farbwerte, Farbdichtewerte etc. bestimmt werden. Bei ausgeschalteter Lichtquelle können die Farbmessköpfe auch für Emissions-, Transmissions- und Umgebungslichtmessungen eingesetzt werden.

Die Beaufschlagung des Messobjekts mit Beleuchtungslicht sowie die Erfassung des zurückgestrahlten Messlichts erfolgt nach normierten Messgeometrien, Eine der gängigsten Messgeometrien sieht dabei eine Beleuchtung unter einem Einfallswinkelbereich von 45° +/- 5-10° und eine Messung unter einem Ausfallswinkelbereich von 0° +/- 5-10° vor (bezogen auf die Normale auf das Messobjekt am Messort). Die einschlägigen Normenwerke definieren daneben aber auch einige andere Messgeometrien. Im folgenden werden unter "für Farbmessanwendungen standardisierten Einfalls- bzw. Ausfallswinkelbereichen" die erwähnte normierte 45°/0°-Messgeometrie und die dazugehörigen, in den einschlägigen Normen festgelegten Winkelbereiche verstanden.

In moderneren Farbmessköpfen werden heute als Lichtquellen schon vielfach Leuchtdioden eingesetzt. Unter anderem kommen dabei weiss leuchtende Hochleistungs-Leuchtdioden mit Lambert'scher Strahlungscharakteristik zum Einsatz. Die Aufspaltung des Messlichts in einzelne Wellenlängenbereiche erfolgt je nach gewünschter Auflösung entweder mittels eines Spektrometers oder mittels einer mehr oder weniger grossen Anzahl von unterschiedlichen Farbfiltern.

Für die Umwandlung der nach Wellenlängenbereichen aufgespalteten Messlichtanteile in entsprechende elektrische Signale werden heute vielfach integrierte Anordnungen von fotoelektrischen Wandler-Elementen, sog. Sensor-Felder in CMOS- oder CCD-Technologie eingesetzt. Dabei kann es sich um eindimensionale Anordnungen, sog. Zeilen-Sensoren, oder zweidimensionale Anordnungen, sog. Flächen-Sensoren handeln. Zeilen-Sensoren liefern entweder eine örtliche Auflösung nach Bildpunkten oder eine Auflösung nach Wellenlängenbereichen, wenn die Wandler-Elemente mit Licht aus unterschiedlichen Wellenlängenbereichen beaufschlagt werden. Flächen-Sensoren können in einer Dimension für eine örtliche Auflösung und in der anderen Dimension für eine Auflösung nach Wellenlängenbereichen eingesetzt werden. Die Auflösung nach Wellenlängenbereichen wird üblicherweise so realisiert, dass den einzelnen Wandler-Elementen des Sensor-Felds oder Gruppen von einigen benachbarten Wandler-Elementen unterschiedliche Farbfilter vorgeschaltet werden.

Weitere Details zu Farbmessköpfen der gattungsgemässen Art sind z.B, im Dokument WO 2006/045621 A1 beschrieben. Insbesondere finden sich dort auch ausführliche Angaben über geeignete Lichtquellen, speziell Leuchtdioden, geeignete Farbfiltersätze mit ihren Durchlasscharakteristiken und geeignete Sensor-Felder. Ferner sind in diesem Dokument auch die übrigen zu einem vollständigen Farbmessgerät gehörigen Bestandteile inklusive elektronische Steuerung von Beleuchtung und fotoelektrischen Wandlern erläutert.

Die bisher bekannt gewordenen Farbmessköpfe der gattungsgemässen Art sind alle relativ kompliziert und voluminös aufgebaut. Sie weisen eine relativ grosse Anzahl von mechanischen, optischen und elektrischen Komponenten auf und sind deshalb nur mit verhältnismässig grossem Aufwand herstellbar.

Durch die vorliegende Erfindung soll nun ein Farbmesskopf der gattungsgemässen Art dahingehend verbessert werden, dass er mit äusserst geringem Konstruktions- und Zusammenbauaufwand hergestellt werden kann und ausserdem ein extrem niedriges Bauvolumen aufweist, sich also für die Miniaturisierung eignet. Gleichzeitig muss die erreichbare Messleistung (Genauigkeit) vergleichbar sein mit der von herkömmlichen Farbmessköpfen der gattungsgemässen Art.

Die Lösung dieser der Erfindung zugrundeliegenden Aufgabe ergibt sich aus den im kennzeichnenden Teil des unabhängigen Anspruchs 1 beschriebenen Merkmalen. Besonders vorteilhafte Ausgestaltungen und Weiterbildungen sind Gegenstand der abhängigen Ansprüche.

Im folgenden wird die Erfindung anhand der Zeichnung näher erläutert. Es zeigen:
- Fig. 1: eine Schrägansicht eines Ausführungsbeispiels der erfindungsgemässen Farbmesskopfs,
- Fig. 2: eine Ansicht analog Fig. 1, jedoch mit abgenommenem Schutzgehäuse,
- Fig. 3: eine Schrägansicht der als Sandwich-Struktur ausgebildeten Empfängereinrichtung des Farbmesskopfs,
- Fig. 4: eine Schrägansicht des Sensor-Felds des Farbmesskopfs,
- Fig. 5: eine Schrägansicht des Sensor-Felds mit vorgeschalteten Farbfiltern,
- Fig. 6: eine Schrägansicht der Farbfilter,
- Fig. 7: eine Schnittansicht der Empfängereinrichtung nach der Linie VII-VII der Fig. 3 und
- Fig. 8: ein Blockschema der wichtigsten Funktionen des Farbmesskopfs.

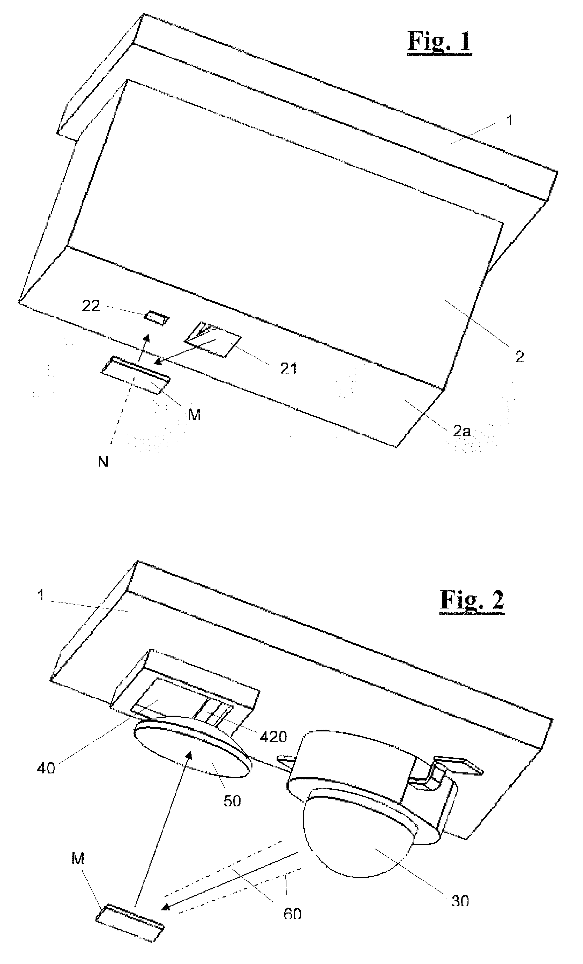

Der erfindungsgemässe Farbmesskopf ist auf einer Leiterplatte 1 aufgebaut und von einem an der Leiterplatte befestigten Schutzgehäuses 2 umschlossen. An der der Leiterplatte 1 gegenüberliegenden Unterseite 2a des Schutzgehäuses 2 sind zwei Öffnungen 21 und 22 angebracht, durch welche Beleuchtungslicht aus dem Schutzgehäuse austreten und vom Messobjekt zurückstrahltes Messlicht in das Innere des Schutzgehäuses eintreten kann. Die Figuren 1 und 2 zeigen ferner auch ein Messobjekt M und die Positionierung des Farbmesskopfs relativ zum Messobjekt im praktischen Einsatz. Die Leiterplatte 1 ist gleichzeitig eine körperliche Schnittstelle für den Einbau des Farbmesskopfs z.B. in ein Farbmessgerät (Host-Gerät).

Die Fig. 2 zeigt die primär funktionswesentlichen Komponenten des erfindungsgemässen Farbmesskopfs. Es sind dies eine Beleuchtungseinrichtung in Form einer Leuchtdiode 30, eine fotoelektrische Empfängereinrichtung 40, eine Feldlinse 50 und durch strichlierte Linien symbolisierte Begrenzungsmittel 60 zur Begrenzung des Beleuchtungswinkelbereichs auf dem Messobjekt M. Die Leuchtdiode 30 und die fotoelektrische Empfängereinrichtung 40 sind in an sich bekannter Weise elektrisch an nicht gezeigte Leitungen auf der Leiterplatte 1 angeschlossen. Über diese Leitungen können die Leuchtdiode 30 und die fotoelektrische Empfängereinrichtung 40 in an sich bekannter Weise mit Strom versorgt und mit einer externen Steuerung verbunden werden.

Im praktischen Betrieb (für Remissionsmessungen) beaufschlagt von der Leuchtdiode 30 abgestrahltes Beleuchtungslicht das Messobjekt M unter einem Einfalls- bzw. Beleuchtungswinkelbereich von 45° +/- 5-10°, bezogen auf die Normale N am Messort des Messobjekts M. Das vom Messobjekt M zurückgestrahlte Messlicht gelangt über die Feldlinse 50 auf die fotoelektrische Empfängereinrichtung 40, wobei der Ausfalls- bzw. Auffangwinkelbereich 0° +/- 5-10° beträgt, ebenfalls bezogen auf die Normale N auf das Messobjekt M. In der Empfängereinrichtung 40 wird das Messlicht in noch zu beschreibender Weise in Messlichtanteile unterschiedlicher Wellenlängenbereiche aufgeteilt, und die einzelnen Messlichtanteile werden in entsprechende elektrische Messsignale umgewandelt, die dann über die Leitungen auf der Leiterplatte 1 von der genannten externen Steuerung ausgelesen werden können.

Die Begrenzung des Beleuchtungswinkelbereichs ergibt sich automatisch durch die Abmessung und Anordnung der Lichtaustrittsöffnung 21 relativ zur Leuchtdiode 30.

In der Praxis sind aber im Inneren des Schutzgehäuses 2 zusätzlich noch hier nicht dargestellte Zwischenwände vorgesehen, welche ausserdem die Empfängereinrichtung 40 gegenüber der Leuchtdiode lichtdicht abschotten, so dass also das Beleuchtungslicht nicht direkt auf die Empfängereinrichtung gelangen kann. Analog wird die Begrenzung des Auffangwinkelbereiches und des Messbereiches durch die Lichteintrittsöffnung 22 bestimmt.

Die in hier nicht dargestellten Halteorganen im Inneren des Schutzgehäuses 2 montierte Feldlinse 50 dient im Wesentlichen zur Begrenzung des Winkelbereichs des auf dem Sensorfeld auftreffenden Lichtes. Bei entsprechendem Filterdesign ist dies nicht zwingend, dann kann die Feldlinse auch wegfallen, wodurch sich der Aufbau des Farbmesskopfs noch weiter vereinfacht.

Als Leuchtdiode 30 wird vorzugsweise eine weiss strahlende Hochleistungsleuchtdiode mit Lambertscher Abstrahlcharakteristik eingesetzt. Solche Leuchtdioden sind an sich bekannt und z.B. im vorgenannten Dokument WO 2006/045621 A1 mit allen relevanten Eigenschaften beschrieben. Eine ganz wesentliche Eigenschaft ist die Höhenunabhängigkeit des Farbmesskopfs bei an sich bekannter, zur Substratebene coplanarer Anordnung der Leuchtdiode, sofern die Höhe und der seitliche Versatz gleich sind, dass heisst bei einen Beleuchtungswinkel von 45°.

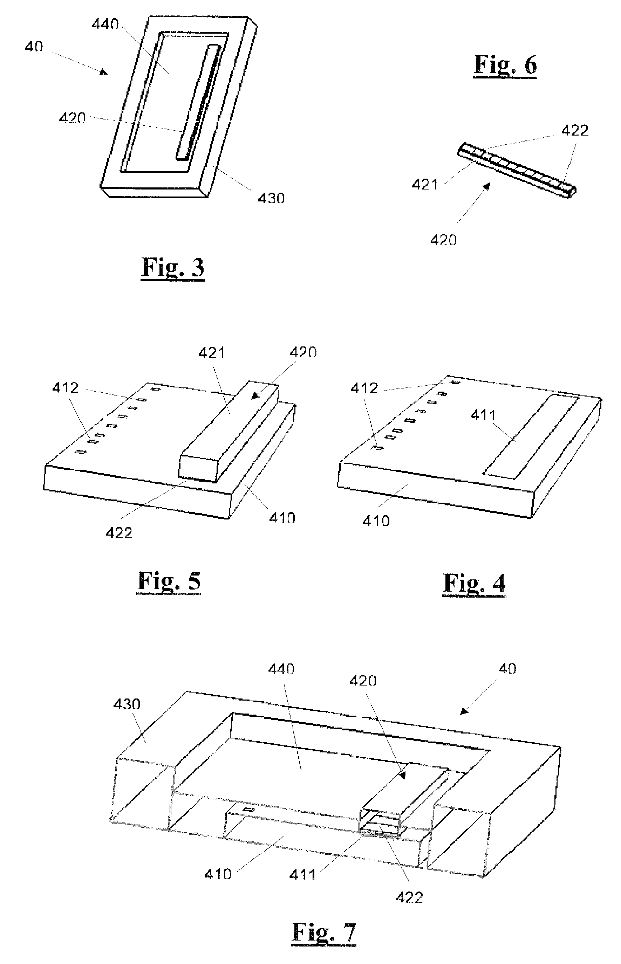

Die in den Figuren 3-7 im Detail dargestellte fotoelektrische Empfängereinrichtung 40 ist gemäss einem Hauptgedanken der Erfindung als flache Sandwich-Struktur ausgebildet. Sie umfasst als wesentlichste Komponenten ein fotoelektrisches Sensor-Feld 410 und eine strukturierte Filteranordnung 420. Die Sandwich-Struktur ist als Ganzes in Fig. 3 dargestellt, die Fig. 7 zeigt einen Schnitt durch die Sandwich-Struktur.

Das in der Fig. 4 isoliert dargestellte fotoelektrische Sensor-Feld 410 ist typischerweise ein in CMOS-Technologie hergestellter (gehäuseloser) Silizium-Chip, auf welchem optische und elektronische Funktionen integriert sind. Dieser Chip umfasst eine linienförmige Anordnung (Zeile) von einzelnen fotoelektrischen Sensor-Pixeln, die durch ein im Chip ausgebildetes Lichteintrittsfenster 411 mit Messlicht beaufschlagt werden. Jedes Sensor-Pixel wandelt das von ihm empfangene Messlicht in ein entsprechendes elektrisches Messsignal um. Die Anzahl der Sensor-Pixel kann beispielsweise 134 betragen. Zur elektrischen Kontaktierung des CMOS-Chips ist dieser mit einer Reihe von Kontaktflächen (Bond Pads) 412 ausgestattet. Diese sind über feine Drähte mit entsprechenden Kontaktflächen auf der Leiterplatte 1 verbunden (wire bonding). Das Sensor-Feld 410 bzw. der Chip ist auf die Leiterplatte 1 aufgeklebt (dye bonding). Geeignete Sensor-Felder sind im Handel erhältlich und werden z.B. von der Firma Hamamatsu, TAOS oder IC-Haus hergestellt.

Die gemäss einem weiteren Hauptgedanken der Erfindung strukturierte Filteranordnung 420 dient zur Aufspaltung des Messlichts in unterschiedliche Wellenlängenbereiche. Sie umfasst einen Filterträger (Substrat) 421 in Form eines länglichen Glasstäbchens und eine Anzahl von einzelnen Farbfiltern 422, die auf das Glasstäbchen 421 z.B. durch Aufdampfen oder durch einen Spinning Prozess aufgebracht sind. Die Filter werden darauf photo-lithographisch geometrisch strukturiert. Die Filter werden typischerweise als Wafer hergestellt z.B. auf einer Glasplatte von 150 mm Durchmesser und dann auf Mass gesägt, analog wie Silizium-Wafer zu Chips verarbeitet werden.

Die strukturierte Filteranordnung 420 ist in der Fig. 6 isoliert dargestellt. Die Anzahl unterschiedlicher Farbfilter 422 hängt von der gewünschten farblichen Auflösung ab. Im Minimum sind normalerweise 3 Farbfilter erforderlich, vorzugsweise werden jedoch 6 - 8 oder 12 unterschiedliche Farbfilter eingesetzt. Diesbezügliche Überlegungen sind detailliert im schon genannten Dokument WO 2006/045621 A1 beschrieben. Es ist selbstverständlich möglich aufgrund der Herstellbarkeit und der Ausbeute die Zahl der Filter auf zwei oder mehrere kürzere Filterträger zu verteilen, d.h. wenn ein Filterträger mit 12 Filtern herstellungstechnisch kritisch wird, zwei Filterträger mit je 6 Filtern neben- bzw. hintereinander zu verwenden. Ferner ist es auch möglich, für das Sensor-Feld 410 zwei oder mehrere Chips einzusetzen und jeden Chip mit einer eigenen Filteranordnung 420 zu versehen, wobei die Filter in den Filteranordnungen unterschiedliche Charakteristiken aufweisen, so dass insgesamt die der gewünschten Auflösung entsprechende Anzahl von Farbfiltern zur Verfügung steht.

Die strukturierte Filteranordnung 420 ist unmittelbar über dem Licht empfindlichen Bereich, d.h. dem Lichteintrittsfenster 411 des Sensor-Felds 410 angeordnet, wobei die Farbfilter 422 den Sensor-Pixeln des Sensor-Felds zugewandt sind. Die Fig. 5 verdeutlicht dies.

Die fotoelektrische Empfängereinrichtung 40 ist, wie schon erwähnt, als flache Sandwich-Struktur ausgebildet. Das Sensor-Feld 410 ist dabei von einem Rahmen 430 umgeben und mit einer opaken Dichtungsmasse 440 vergossen, wobei lediglich die Filteranordnung 420 aus der Dichtungsmasse herausragt. Die Figuren 3 und 7 verdeutlichen dies. Durch diesen Aufbau wird der Sensor-Chip geschützt und gleichzeitig eine einfache Positionierung der Filteranordnung 420 erreicht.

Ein Prozess zur Herstellung einer Chip-Packung mit Glas-Deckschicht ist an sich bekannt unter dem Namen ShellOP und wird angeboten von der Firma XinTec Inc. 4F1, No.25, Ji-Lin Road, Chung-Li Industry Park, Tao Yuan Hsien, Taiwan, R.O.C. Bei diesem Herstellungsprozess wird ein Wafer mit den die elektronischen und photoelektrischen Komponenten enthaltenden Silizium-Chips sandwich-artig zwischen zwei Glasplatten eingebettet, und die Chips werden danach zusammen mit den beiden Glasschichten vereinzelt. Für die Zwecke der vorliegenden Erfindung können die benötigten Filter direkt in den Chip-Herstellungsprozess integriert werden, indem die Unterseite der Glas-Deckschicht vor der Aufbringung auf den Silizium-Chip mit einer entsprechenden Filterstruktur bedampft wird.

Ein weiteres Verfahren zur Aufbringung von mehreren verschiedenen Filtern auf einem Silizium-Chip ist das Aufbringen einer dünnen photo-strukturierbaren Lackschicht durch Aufschleudern ("Spinnen") und darauf folgendes photo- lithographisches Strukturieren. Das Verfahren wir heute breit verwendet um Video CCDs mit RGB Filtern zu versehen. Bei diesem Verfahren werden die erforderliche Anzahl unterschiedlicher Filter-Lacke mit gut definierter spektraler Charakteristik nacheinander direkt auf die Pixel des Flächensenors aufgebracht. Nähere Details finden sich z.B. auf der Webseite der Firma Brewer Science's Specialty Materials Division.

Die einzelnen Sensor-Pixel des Sensor-Felds 410 sind isothermisch auf dem Chip integriert. Gemäss einem weiteren Aspekt der Erfindung werden einige (z.B. 6) Sensor-Pixel vorzugsweise an einem Ende der linienförmigen Anordnung nicht mit Messlicht beaufschlagt und so für Dunkelmessungen benutzt. Anhand dieser Dunkelmessungen kann dann rechnerisch eine Kompensation des thermischen Drift-Verhaltens des Sensor-Felds durchgeführt werden. Die Nicht-Beaufschlagung mit Messlicht kann durch geeignete Lichtführung oder durch entsprechende Abschattung der Sensor-Pixel erreicht werden. Geeignet sind auch Abdeckung durch Metallisierung bei der Herstellung des Chips oder Abdeckung durch schwarzen photostrukturierbaren Lack. Für den Fachmann ist dies klar und deshalb in den Figuren nicht dargestellt.

Gemäss einem weiteren Aspekt der Erfindung ist der Farbmesskopf mit elektronischen Datenerfassungs-, Rechen-, Speicher- und Schnittstellenfunktionen ausgestattet, wobei diese elektronischen Funktionen entweder im Chip des Sensor-Felds als ASIC oder in entsprechenden mehr oder weniger hoch integrierten Bausteinen auf der Leiterplatte angeordnet sind. Diese Funktionen implementieren die Kalibrierung des Sensor-Chips, die Erfassung der Rohdaten, die Korrektur derselben, die Weiterverarbeitung zu metrischen Daten für die gewünschte Anwendung (z.B. L,a,b-Farbwerte, Dichten, Spektren, Lux etc.) und schliesslich die Kommunikation mit dem übergeordneten Gerät (Host). Der erfindungsgemässe Farbmesskopf wird damit zu einem eigenständigen Element, das mit dem Gerät, in dem es eingesetzt ist (Host), auf der Ebene der metrischen Daten kommuniziert. Das übergeordnete Gerät (Host) braucht sich also nicht um die eigentliche Datenerfassung und Umrechnung zu kümmern.

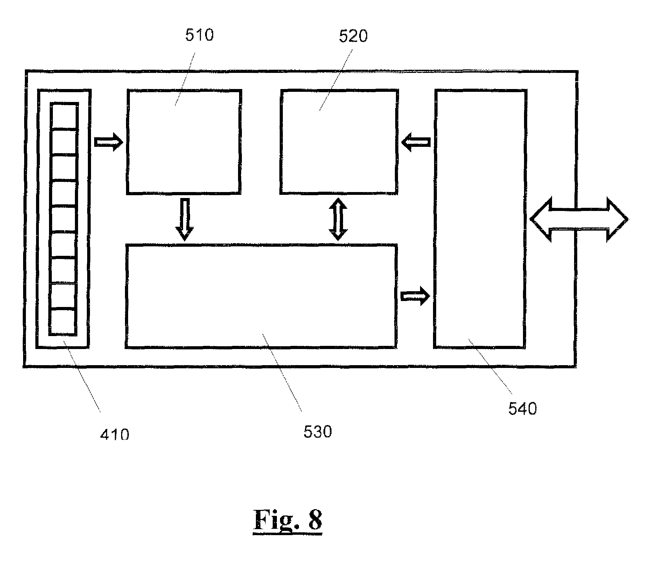

Die Figur 8 zeigt ein prinzipielles Blockschema der einzelnen Komponenten der genannten Funktionen. Die rohen Messdaten der lichtempfindlichen Pixel des Sensor-Felds 410 werden im Funktionsblock 510 ausgelesen, digitalisiert und zwischengespeichert. Der Funktionsblock 520 enthält gespeicherte Eichdaten und die zugehörige Firmware. Ein Mikroprozessor 530 arbeitet mit den beiden Funktionsblöcken 510 und 520 zusammen und steuert auch einen Schnittstellenblock 540 an, über den die Kommunikation mit dem Host-Gerät erfolgt Die Berechnung der gewünschten, metrischen Daten (z.B. L,a,b-Farbwerte, Dichten, Spektren, Lux etc.) erfolgt durch den Mikroprozessor anhand der im Block 510 gespeicherten Daten in Verbindung mit den im Block 520 gespeicherten Eichdaten. Für die Eichung und Kalibrierung des Farbmesskopfs sind sensor-spezifsche Daten erforderlich, die bei der Fertigung bestimmt und fest einprogrammiert werden, sowie Kalibrationsdaten, die bei der Inbetriebnahme des Farbmesskopfs erfasst und abgespeichert werden. Die für die Eichung und Kalibrierung von Farbmessgeräten erforderlichen Schritte sind prinzipiell bekannt und bedürfen daher für den Fachmann keiner näheren Erläuterung.

Wie sich aus den vorstehenden Ausführungen ergibt, sind alle kritischen Funktionskomponenten des Farbmesskopfs auf der Leiterplatte 1 montiert. Dies erlaubt die automatisierte und deshalb kostengünstige Montage des Farbmesskopfs und führt ausserdem zu einem extrem geringen Bauvolumen.

Der erfindungsgemässe Farbmesskopf wird vorzugsweise zur Remissionsmessung verwendet. Ein Haupteinsatzgebiet sind dabei Einbausensoren für Drucker oder in der Prozesskontrolle. Der Farbmesskopf kann aber auch in Handmessgeräte eingebaut werden, mit denen neben Remission auch die Emission eines Monitors, Umgebungslicht unter Verwendung eines Diffuser-Elementes oder die Emission von einer Projektionswand ausgemessen werden kann. Ferner kann der erfindungsgemässe Farbmesskopf, ggf. auch unter Weglassung der Lichtquelle, in goniometrischen oder Kugelfarbmessgeräten eingesetzt werden, wo üblicherweise ein Mehrkanalspektrometer verwendet wird.

## Patentansprüche

1. Fotoelektrischer Farbmesskopf zur Ausmessung von Farbeigenschaften eines Messobjekts, mit einer Beleuchtungseinrichtung (30) zur Beaufschlagung des Messobjekts (M) mit Beleuchtungslicht und mit einer wellenlängenbereichsselektiven fotoelektrischen Empfängereinrichtung (40), welche vom beleuchteten Messobjekt remittiertes Messlicht auffängt und in entsprechende elektrische Messsignale umwandelt, wobei die Beleuchtungseinrichtung eine im wesentlichen weiss strahlende Leuchtdiode (30) und Mittel (60) zur Begrenzung des Einfallswinkelbereichs umfasst, so dass das Messobjekt Licht nur unter einem für Farbmessanwendungen standardisierten Einfallswinkelbereich von vorzugsweise 45° +/- 5-10° empfängt, und wobei die Empfängereinrichtung ein aus einer Vielzahl von zeilenförmig angeordneten fotoelektrischen Sensor-Pixeln bestehendes Sensor-Feld (410) aufweist und die Sensor-Pixel durch vorgeschaltete Farbfilter (422) auf unterschiedliche Wellenlängenbereiche sensibilisiert sind, **dadurch gekennzeichnet, dass** das Sensor-Feld (410) als Chip ausgebildet ist und zusammen mit der Leuchtdiode (30) auf einer gemeinsamen Leiterplatte (1) montiert ist.

2. Farbmesskopf nach Anspruch 1, **dadurch gekennzeichnet, dass** das Sensor-Feld (410) zusammen mit den Farbfiltern (422) als flache Sandwich-Struktur ausgebildet ist.

3. Farbmesskopf nach einem der vorangehenden Ansprüche, **dadurch gekennzeichnet, dass** das Sensor-Feld (410) als integriertes CMOS - Element ausgebildet ist.

4. Farbmesskopf nach einem der vorangehenden Ansprüche, **dadurch gekennzeichnet, dass** das Sensor-Feld (410) ein längliches Lichteintrittsfenster (411) aufweist und dass die Farbfilter (422) unmittelbar über dem Lichteintrittsfenster montiert sind.

5. Farbmesskopf nach einem der vorangehenden Ansprüche, **dadurch gekennzeichnet, dass** die Farbfilter (422) auf einem länglichen transparenten Filterträger (421) angebracht und in dessen Längsrichtung hintereinander angeordnet sind.

6. Farbmesskopf nach einem der vorangehenden Ansprüche, **dadurch gekennzeichnet, dass** das Sensor-Feld (410) von einem Schutzrahmen (430) umschlossen und mit einer opaken Dichtungsmasse (440) vergossen ist.

7. Farbmesskopf nach einem der vorangehenden Ansprüche, **dadurch gekennzeichnet, dass** das Sensor-Feld (410) eine Glasdeckschicht aufweist und dass die Farbfilter (422) an der Innenseite der Glasdeckschicht angebracht sind.

8. Farbmesskopf nach einem der Ansprüche 1-6, **dadurch gekennzeichnet, dass** das die Farbfilter (422) durch direkt auf den lichtempfindlichen Bereich des Sensor-Felds (410) aufgebrachte photostrukturierbare Filter-Lacke gebildet sind.

9. Farbmesskopf nach einem der vorangehenden Ansprüche, **dadurch gekennzeichnet, dass** vorzugsweise an einem Ende des Sensor-Felds (410) einige Sensor-Pixel ausserhalb des vom Messlicht beaufschlagten Bereich liegen oder vom Messlicht abgeschattet sind.

10. Farbmesskopf nach einem der vorangehenden Ansprüche, **dadurch gekennzeichnet, dass** mindestens 3, vorzugsweise 6-12 unterschiedliche Farbfilter (422) vorgesehen sind.

11. Farbmesskopf nach einem der vorangehenden Ansprüche, **dadurch gekennzeichnet, dass** die Leuchtdiode (30) als Hochleistungsleuchtdiode mit Lambertscher Abstrahlcharakteristik ausgebildet ist.

12. Farbmesskopf nach einem der vorangehenden Ansprüche, **dadurch gekennzeichnet, dass** im Strahlengang des vom beleuchteten Messobjekt remittierten Messlichts vor den Farbfiltern (422) eine Feldlinse (50) vorgesehen ist.

13. Farbmesskopf nach einem der vorangehenden Ansprüche, **dadurch gekennzeichnet, dass** das Sensor-Feld (410) aus zwei oder mehreren Chips besteht, wobei jedem Chip eine eigene Farbfilteranordnung (420) zugeordnet ist.

14. Farbmesskopf nach einem der vorangehenden Ansprüche, **dadurch gekennzeichnet, dass** er so ausgebildet ist, dass er bei ausgeschalteter Beleuchtungseinrichtung auch für Emissionsmessungen einsetzbar ist.

15. Farbmesskopf nach einem der vorangehenden Ansprüche, **dadurch gekennzeichnet, dass** er mit elektronischen Datenerfassungs- und Speicherungsfunktionen (510) ausgestattet ist.

16. Farbmesskopf nach einem der vorangehenden Ansprüche, **dadurch gekennzeichnet, dass** er mit elektronischen Verarbeitungsfunktionen (530) zur Berechnung von metrischen Daten ausgestattet ist.

17. Farbmesskopf nach einem der vorangehenden Ansprüche, **dadurch gekennzeichnet, dass** er mit elektronischen Schnittstellenfunktionen (540) zur Kommunikation mit einem externen Gerät ausgestattet ist.

18. Farbmesskopf nach einem der Ansprüche 15-17, **dadurch gekennzeichnet, dass** die elektronischen Funktionen als ASIC in das Sensor-Feld (410) integriert sind.

19. Farbmesskopf nach einem der Ansprüche 15-17, **dadurch gekennzeichnet, dass** die elektronischen Funktionen durch auf der Leiterplatte (1) angeordnete elektronische Bauelemente realisiert sind.

## Geänderte Patentansprüche

### Geänderte Patentansprüche gemäss Regel 137(2) EPÜ.

**1.** Fotoelektrischer Farbmesskopf zur Ausmessung von Farbeigenschaften eines Messobjekts (M), mit einer Beleuchtungseinrichtung (30) zur Beaufschlagung des Messobjekts (M) mit Beleuchtungslicht und mit einer wellenlängenbereichsselektiven fotoelektrischen Empfängereinrichtung (40), welche vom beleuchteten Messobjekt (M) remittiertes Messlicht auffängt und in entsprechende elektrische Messsignale umwandelt, wobei die Beleuchtungseinrichtung (30) eine im Wesentlichen weiss strahlende Leuchtdiode (30) und Mittel (60) zur Begrenzung des Einfallswinkelbereichs umfasst, so dass das Messobjekt (M) Licht nur unter einem für Farbmessanwendungen standardisierten Einfallswinkelbereich von vorzugsweise 45° +/- 5-10° empfängt, wobei die Empfängereinrichtung (40) ein aus einer Vielzahl von zeilenförmig angeordneten fotoelektrischen Sensor-Pixeln bestehendes Sensor-Feld (410) aufweist und die Sensor-Pixel durch vorgeschaltete Farbfilter (422) auf unterschiedliche Wellenlängenbereiche sensibilisiert sind, und wobei das Sensor-Feld (410) als Chip ausgebildet ist und zusammen mit der Leuchtdiode (30) auf einer gemeinsamen Leiterplatte (1) montiert ist;
**dadurch gekennzeichnet, dass**
der fotoelektrische Farbmesskopf mit einem übergeordneten Gerät kommuniziert, und zwar über eine Schnittstelle (540), die auf der Leiterplatte (1) angeordnet ist,
wobei der fotoelektrische Farbmesskopf metrische Daten aus den elektrischen Messsignalen ermittelt und dem übergeordneten Gerät über die Schnittstelle (540) bereitstellt.
